# EUROPEAN PATENT APPLICATION

(11) **EP 4 753 015 A1**
(43) Date of publication of application: **03.06.2026**
(21) Application number: 25749114.2
(22) Date of filing: 21.01.2025
(51) Int. Cl.: H01M 10/44, G01L 5/00

(54) **APPARATUS FOR APPLYING PRESSURE TO BATTERY CELL**

(30) Priority: 31.01.2024 KR 20240014962; 20.01.2025 KR 20250007876
(71) Applicant: LG Energy Solution, Ltd., Seoul 07335 (KR)
(72) Inventor: BAE, Sanggeun, Daejeon 34122 (KR); AN, Tai Wook, Daejeon 34122 (KR)
(74) Representative: Goddar, Heinz J.
(86) International application number: PCT/KR2025/001132
(87) International publication number: WO 2025/165027

(57) **Abstract**

An apparatus for applying pressure to a battery cell according to an embodiment of the present disclosure comprises: a pressurizing unit that applies pressure to the battery cell, and a pressure-sensitive member insertion unit that supplies a pressure-sensitive member to the pressurizing unit, wherein the pressurizing unit comprises a mounting unit that mounts the battery cell or the pressure-sensitive member, and a pressurizing jig that moves toward the mounting unit to apply pressure to the battery cell or the pressure-sensitive member, and wherein the pressure-sensitive member insertion unit comprises at least one grip part that automatically grips and moves the pressure-sensitive member.

## Description

### TECHNICAL FIELD

### Cross Citation with Related Application(s)

This application claims priority to and the benefit of Korean Patent Application No. 10-2024-0014962, filed on January 31, 2024, and Korean Patent Application No. 10-2025-0007876, filed on January 20, 2025, the disclosures of which are incorporated herein by reference in their entirety.

The present disclosure relate to an apparatus for applying pressure to a battery cell, and more particularly, a pressure applying apparatus that easily and accurately measures the flatness and pressurization force of a jig before mounting the battery cell on the jig.

### BACKGROUND

In modern society, as portable devices such as a mobile phone, a notebook computer, a camcorder and a digital camera as well as energy storage systems (ESS) have been daily used, the development of technologies in the fields related thereto has been activated. In addition, chargeable/dischargeable secondary batteries are used as a power source for an electric vehicle (EV), a hybrid electric vehicle (HEV), a plug-in hybrid electric vehicle (P-HEV) and the like, in an attempt to solve air pollution and the like caused by existing gasoline vehicles using fossil fuel. Therefore, the demand for development of the secondary battery is growing.

Presently, commercially available batteries include nickel-cadmium batteries, nickel-hydrogen batteries, nickel-zinc batteries, and lithium secondary batteries. Of these batteries, the lithium secondary batteries have come into the spotlight because they have advantages, for example, being freely charged and discharged, and having very low self-discharge rate and high energy density.

The manufacturing process of such a lithium secondary battery is roughly classified into three steps: an electrode process, an assembly process, and an activation process. During the battery cell activation step, the battery cell is mounted on the pressure applying apparatus, and charging and discharging of the battery cell are performed. This process of performing a predetermined charge and discharge using a pressure applying apparatus to activate the battery is called a formation process or activation process.

During the formation process, it is possible to apply pressure to both surfaces of the battery cell using a pressure applying means such as a jig including a flat press plate during activation charging, and this is also referred to as jig formation. This jig formation prevents expansion of the negative electrode during the activation process, promotes chemical reactions of the battery, induces gas evolution, and moves this internal gas to the gas pocket part.

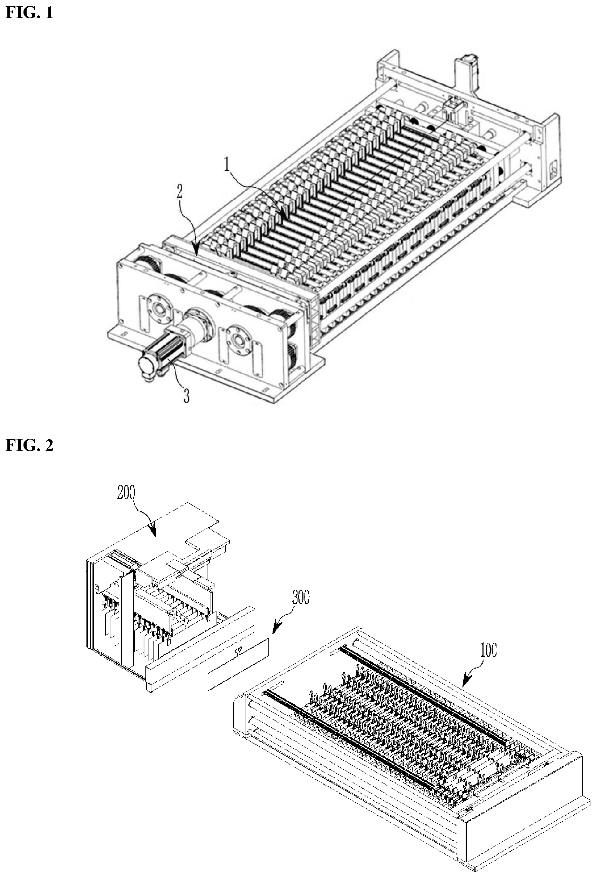

FIG. 1 illustrates a pressure applying apparatus according to the prior art. The pressure applying apparatus of FIG. 1 includes a plurality of mounting units 1, a pressurizing jig 2, and a driving unit 3. Each of the plurality of mounting units 1 is mounted with a plurality of battery cells. The pressurizing jig 2 pressurizes the plurality of mounting units 1 on which a plurality of battery cells are mounted. The pressurizing jig 2 may be moved toward the mounted battery cells by the driving unit 3 to apply pressure to the battery cells. Charging and discharging of the battery cells is performed in a state of applying pressure to a plurality of battery cells by the pressurizing jig 2.

### DETAILED DESCRIPTION OF THE INVENTION

### Technical Problem

It is an object of the present disclosure to provide a pressure applying apparatus that easily and accurately measures the flatness and pressurization force of a jig before mounting the battery cell on the jig.

However, the technical objects to be solved by embodiments of the present disclosure are not limited to the above-described objects, and can be variously expanded within the scope of the technical idea included in the present disclosure.

### Technical Solution

According to an aspect of the present disclosure, provided is an apparatus for applying pressure to a battery cell, the apparatus comprising: a pressurizing unit that applies pressure to the battery cell, and a pressure-sensitive member insertion unit that supplies a pressure-sensitive member to the pressurizing unit, wherein the pressurizing unit comprises a mounting unit that mounts the battery cell or the pressure-sensitive member, and a pressurizing jig that moves toward the mounting unit to apply pressure to the battery cell or the pressure-sensitive member, and wherein the pressure-sensitive member insertion unit comprises at least one grip part that automatically grips and moves the pressure-sensitive member.

In an embodiment, the grip part may comprise a grip part main body and at least one gripper coupled to the grip part main body, and the gripper can grip the pressure-sensitive member.

In an embodiment, the grip part may be provided in plural numbers, and may be provided symmetrically along the width direction of the pressure-sensitive member or arranged at predetermined intervals.

In an embodiment, the mounting unit of the pressurizing unit is provided in plural numbers, the pressure-sensitive member is provided in plural numbers, and a plurality of the grippers are provided per grip part, thereby allowing the plurality of pressure-sensitive members to be gripped at once by the plurality of grippers.

In an embodiment, in a state where the gripper grips the pressure-sensitive member, the grip part main body may be movable from the pressure-sensitive member insertion unit to the jig unit, or in the reverse direction thereof.

In an embodiment, in a state where the gripper grips the pressure-sensitive member, the grip part main body may be movable into the mounting unit of the jig unit, or in the reverse direction thereof.

In an embodiment, the grip part main body may be movable in the height direction, longitudinal direction, and width direction of the pressure-sensitive member insertion unit, respectively, thereby enabling alignment between the pressure-sensitive member and the mounting unit after the pressure-sensitive member is located on the mounting unit of the jig unit.

In an embodiment, the pressure-sensitive member may be a sensor that senses pressure in an electrical manner.

In an embodiment, the pressure-sensitive member may be a surface pressure sensor or an electronic pressure-sensitive film.

In an embodiment, the pressure-sensitive member comprises at least one pressure sensor arranged over a large area of the main body, and may sense a pressure value applied to the pressure-sensitive member mounted on the mounting unit.

In an embodiment, the pressure-sensitive member comprises a plurality of pressure sensors arranged over a large area of the main body, wherein the plurality of pressure sensors may be arranged in at least one row and at least one column, and each of the plurality of pressure sensors may sense the pressure applied to each sub-region of the pressure-sensitive member.

In an embodiment, the pressure-sensitive member may further comprise: a detection unit that receives pressure data transmitted from the plurality of pressure sensors and determines whether the pressure data falls within a predetermined range; and a connection unit that electrically connects the detection unit and the plurality of pressure sensors.

In an embodiment, the pressure-sensitive member may further comprise a transmission unit that transmits pressure data from the detection unit.

In an embodiment, the pressure-sensitive member further comprises a first connection unit arranged in the row direction of the pressure-sensitive member, and a second connection unit arranged in the column direction, wherein the first connection unit may electrically connect at least one pressure sensor arranged in each row, and the second connection unit may electrically connect at least one pressure sensor arranged in each column.

In an embodiment, the pressure-sensitive member comprises a first detection unit electrically connected to the first connection unit, and a second detection unit electrically connected to the second connection unit, wherein the first detection unit may determine whether the pressure data transmitted by the first connection unit falls within a predetermined range, and the second detection unit may determine whether the pressure data transmitted by the second connection unit falls within the predetermined range.

In an embodiment, the first detection unit may transmit the row of the first connection unit that has transmitted pressure data that does not fall within the predetermined range, among the plurality of rows of the first connection units, and the pressure data of the corresponding row, and the second detection unit may transmit the column of the second connection unit that has transmitted pressure data that does not fall within the predetermined range, among the plurality of columns of the second connection units, and the pressure data of the corresponding column.

In an embodiment, the pressure data may be at least one of: each pressure value sensed from each of the plurality of pressure sensors, the sum or average value of the pressure values of the plurality of pressure sensors, and the maximum or minimum value among the pressure values sensed from the plurality of pressure sensors.

In an embodiment, the pressurization force or flatness of the pressurizing jig of the jig unit or the pressurization force or flatness of the mounting unit is calculated in accordance with the pressure data sensed by the pressure-sensitive member.

In an embodiment, the battery cell pressure applying apparatus further comprises a control unit integrated into or remotely connected to the jig unit, wherein the control unit may control the pressurization force or flatness of the pressurizing jig of the jig unit or the pressurization force or flatness of the mounting unit in accordance with the pressure sensed by the pressure-sensitive member.

In an embodiment, the battery cell pressure applying apparatus can perform charging and discharging in a state of applying pressure to the battery cell, the pressurizing unit further comprises at least two cell pressurizing units per mounting unit, and the cell pressurizing unit comprises a charge/discharge terminal, wherein the charge/discharge terminal may come into contact with the electrode lead of the battery cell when applying pressure to the battery cell by the pressurizing jig.

### Advantageous Effects

According to the present disclosure, before mounting the battery cell on the pressure applying apparatus, an electronic pressure-sensitive film is automatically inserted to measure the flatness and pressurization force of the jig, thereby allowing the process to be carried out more easily and efficiently and also improving measurement accuracy. In other words, this maximizes the efficiency of the activation process and consequently enhances the quality of the finally fabricated battery cells.

The effects of the present disclosure are not limited to the effects mentioned above, and additional other effects not described above will be clearly understood from the description of the appended claims by those skilled in the art.

### BRIEF DESCRIPTION OF THE DRAWINGS

FIG. 1 illustrates a pressure applying apparatus according to the prior art.
FIG. 2 illustrates a pressure applying apparatus according to an embodiment of the present disclosure.
FIG. 3 is a perspective view of the jig unit of the pressure applying apparatus of FIG. 2.
FIG. 4 illustrates a side view of the mounting member and the cell pressurizing unit, which are components of the jig unit of FIG. 3, as well as the battery cell mounted on the mounting member.
FIG. 5 illustrates a state in which a pressure-sensitive member is mounted on the mounting member instead of the battery cell in FIG. 4.
FIG. 6 is a reference diagram of FIG. 4, illustrating the mounting member, the cell pressurizing unit, and the battery cell when the battery cell is viewed from inside the mounting member of FIG. 4.
FIG. 7 is a reference diagram of FIG. 5, illustrating the mounting member, the cell pressurizing unit, and the pressure-sensitive member when the pressure-sensitive member is viewed from inside the mounting member of FIG. 5.
FIG. 8 is a perspective view of the pressure-sensitive member insertion unit of the pressure applying apparatus of FIG. 2.
FIG. 9 illustrates a grip part, which is one component of the pressure-sensitive member insertion unit of FIG. 8.
FIG. 10 illustrates an example of a pressure-sensitive member according to an embodiment of the present disclosure.
FIG. 11 is a reference diagram, schematically illustrating an embodiment of the transmission unit of the pressure-sensitive member of FIG. 10.
FIG. 12 is a reference diagram of FIG. 5 and illustrates an embodiment in which a plurality of mounting units are individually adjusted in the above-described embodiments.

### DETAILED DESCRIPTION OF THE EMBODIMENTS

Hereinafter, various embodiments of the present disclosure will be described in detail with reference to the accompanying drawings so that those skilled in the art can easily carry out them. The present disclosure may be modified in various different ways, and is not limited to the embodiments set forth herein.

In order to clearly describe the present disclosure, descriptions of parts unrelated to the description of the present disclosure will be omitted, and same reference numerals designate same or like elements throughout the description.

Further, in the drawings, the size and thickness of each element are arbitrarily illustrated for convenience of description, and the present disclosure is not necessarily limited to those illustrated in the drawings. In the drawings, the thickness of layers, areas, etc. are exaggerated for clarity. In the drawings, for convenience of description, the thicknesses of a part and an area are exaggerated.

Further, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, a certain part being located "above" or "on" a reference portion means the certain part being located above or below the reference portion and does not particularly mean the certain part "above" or "on" toward an opposite direction of gravity.

Further, throughout the description, when a portion is referred to as "including" or "comprising" a certain component, it means that the portion can further include other components, without excluding the other components, unless otherwise stated.

Further, throughout the description, when referred to as "planar", it means when a target portion is viewed from the upper side, and when it is referred to as "cross-sectional", it means when a target portion is viewed from the side of a cross section cut vertically.

Below, embodiments of the present disclosure will be described with reference to the accompanying drawings.

FIG. 2 illustrates a battery cell pressure applying apparatus according to an embodiment of the present disclosure.

The pressure applying apparatus 10 of FIG. 2 includes a jig unit 100 and a pressure-sensitive member insertion unit 200 that supplies a pressure-sensitive member 300 to the jig unit 100.

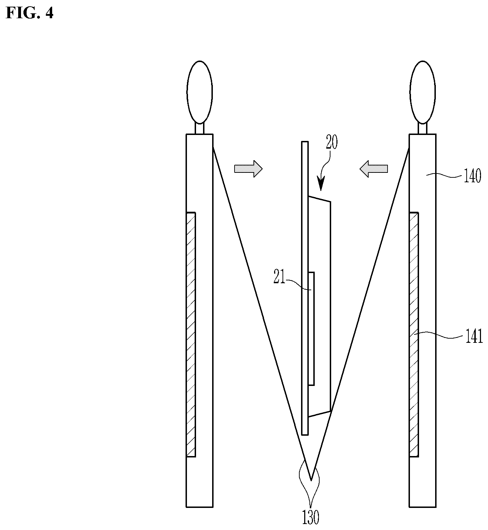

At least one battery cell 20 (see FIG. 4) is mounted on a jig unit 100 to apply pressure to the battery cell 20 at both ends. After applying pressure top the battery cell 20, charging and discharging of the battery cell 20 may also be carried out, and inspection of the battery cell 20 may be performed as necessary.

At this time, before mounting the battery cell 20 on the jig unit 100 and applying pressure to the battery cell 20, the pressure-sensitive member 300 is mounted on the jig unit 100 and the flatness and/or pressurization force of the jig of the jig unit 100 is first measured. For this purpose, the pressure-sensitive member insertion unit 200 of the pressure applying apparatus 10 supplies the pressure-sensitive member 300 to the jig unit 100.

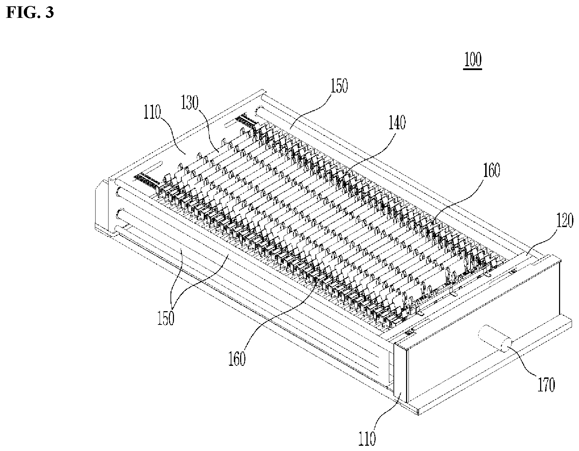

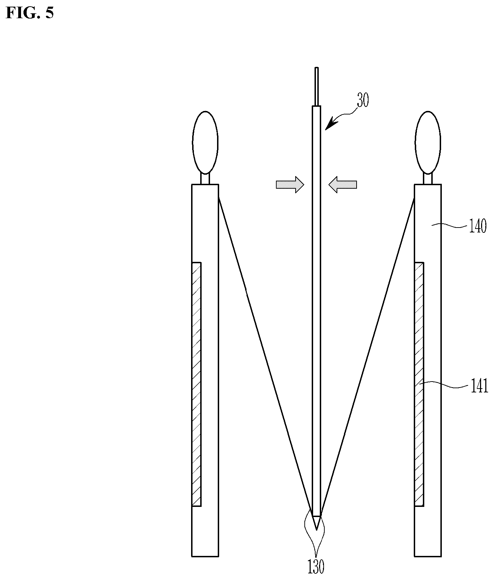

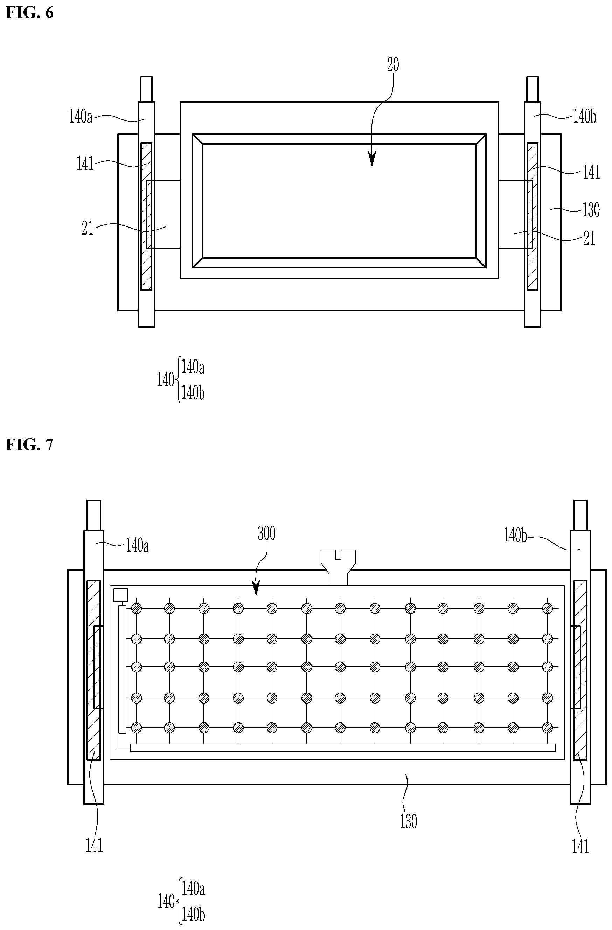

First, FIG. 3 is a perspective view of the jig unit of the pressure applying apparatus of FIG. 2. FIG. 4 illustrates a side view of the mounting member and the cell pressurizing unit, which are components of the jig unit of FIG. 3, as well as the battery cell mounted on the mounting member. FIG. 5 illustrates a state in which a pressure-sensitive member is mounted on the mounting member instead of the battery cell in FIG. 4. FIG. 6 is a reference diagram of FIG. 4, illustrating the mounting member, the cell pressurizing unit, and the battery cell when the battery cell is viewed from inside the mounting member of FIG. 4. FIG. 7 is a reference diagram of FIG. 5, illustrating the mounting member, the cell pressurizing unit, and the pressure-sensitive member when the pressure-sensitive member is viewed from inside the mounting member of FIG. 5.

The jig unit 100 includes a frame 110, a pressurizing jig 120, a mounting unit 130, a cell pressurizing unit 140, a jig guide shaft 150, a mounting unit 160, and a jig driving unit 170.

A pressurizing jig 120 is arranged at one end or both ends of the frame 110. FIG. 3 illustrates, as an example, a case in which the pressurizing jig 120 is provided as one unit, and the pressurizing jig 120 is arranged at one end in the longitudinal direction (vertical direction) of the frame 110.

The mounting unit 130 may be provided as on unit, or may be provided as a plurality of units. Each mounting unit 130 is arranged across the width direction (horizontal direction) of the frame 110. FIG. 3 illustrates, as an example, a case in which the mounting units 130 are provided as a plurality of units so that the plurality of battery cells 20 can be mounted and pressurized at once, and the plurality of mounting units 130 are arranged along the longitudinal direction of the frame 110. In FIGS. 4 and 5, one mounting unit 130 is representatively illustrated among the plurality of mounting units 130 of FIG. 3.

The mounting unit 130 has, for example, a shape in which a single plate is folded, and is formed in a V-shape when viewed from the side as shown in FIG. 4, so that the battery cell 20 is inserted and mounted into the concave portion of the V-shaped mounting unit 130. Similarly, as illustrated in FIG. 5, the pressure-sensitive member 300 may be inserted and mounted into the concave portion of the mounting unit 130. The mounting unit 130 may be, for example, a cell divider, but the present disclosure is not limited thereto. The mounting unit is sufficient if it has a structure, shape, and material that allows the battery cell 20 and pressure-sensitive member 300 to be mounted thereon and pressed by the pressurizing jig 120.

Referring to FIGS. 4 and 6, when a battery cell 20 is inserted and mounted into the mounting unit 130, the pressurizing jig 120 moves toward the mounting unit 130 along the jig guide shaft 150 to apply pressure to the battery cell 20. A cell pressurizing unit 140 is coupled to the mounting unit 130, and the cell pressurizing unit 140 may further include a charge/discharge terminal 141. The charge/discharge terminal 141 is provided at a position corresponding to the electrode lead 21 of the battery cell 20 mounted on the mounting unit 130. When the pressurizing jig 120 applies pressure to the mounting unit 130, the battery cell 20 is pressurized, and the charge/discharge terminal 141 provided on the cell pressurizing unit 140 comes into contact with the electrode lead 21 of the battery cell 20. Thereby, charging and discharging of the battery cell 20 may be performed. The cell pressurizing unit 140 may be formed, for example, in a bar shape, but the present disclosure is not limited to those illustrated in the figure. At least two cell pressurizing units 140 may be provided per mounting unit 130, and may be provided symmetrically on at least both sides of the mounting unit 130. In the embodiment of the present disclosure, by way of example, a case is illustrated in which two cell pressuring unit 140 are provided on both sides of the battery cell 20 mounted on the mounting unit 130, which are denoted by distinguishing them as "140a" and "140b" respectively.

Referring to FIGS. 5 and 7, similarly, when the pressure-sensitive member 300 is inserted and mounted into the mounting unit 130, the pressurizing jig 120 moves toward the mounting unit 130 along the jig guide shaft 150 to apply pressure to the pressure-sensitive member 300. The pressure-sensitive member 300 inserted into the mounting unit 130 is inserted so as not to overlap with the cell pressurizing unit 140. This is to prevent the pressure sensor 320 of the pressure-sensitive member 300 from being damaged during pressure application by the cell pressurizing unit 140. The detailed configuration of the pressure-sensitive member 300 will be described in more detail later.

Referring again to FIG. 3, the pressurizing jig 120 is provided with through holes symmetrically on both sides of the frame 110 in the width direction, and a jig guide shaft 150 passes through the through holes of the pressurizing jig 120. The number of through holes of the pressurizing jig 120 and the jig guide shafts 150 may be adjusted as necessary. The jig driving unit 170 may include a linear driving motor. When the pressurizing jig 120 is pushed toward the mounting unit 130 by driving the jig driving unit 170, the pressurizing jig 120 may apply pressure to the battery cell 20 and/or the pressure-sensitive member 300 while moving along the jig guide shaft 150.

At this time, it is important that the pressurizing jig 120 moves without being tilted to either side, thereby applying even pressure to a large area of the battery cell 20. As a result, the jig guide shafts 150 are provided symmetrically on both sides, and the pressurizing jig 120 moves along the jig guide shafts 150 on both sides so as not to tilt to either side. Nevertheless, an error may occur in which the pressurizing jig 120 and/or the mounting unit 130 are tilted to one side. Therefore, before inserting the battery cell 20, the pressure-sensitive member 300 is first inserted into the mounting unit 130, and while applying pressure with the pressurizing jig 120, the pressure from the pressurizing jig 120 is sensed to measure the pressurization degree and/or flatness of the pressurizing jig 120 and/or the pressurization degree and/or flatness of the mounting unit 130. Thereby, the pressurization degree and/or flatness of the pressurizing jig 120 is corrected, or the pressurization degree and/or flatness of the mounting unit 130 is corrected, or the difference in the pressurization degree of each of the cell pressurizing units 140;140a, 140b provided on both sides of the mounting unit 130 or the pressurization degree between the cell pressurizing units 140; 140a, 140b provided on both sides is corrected.

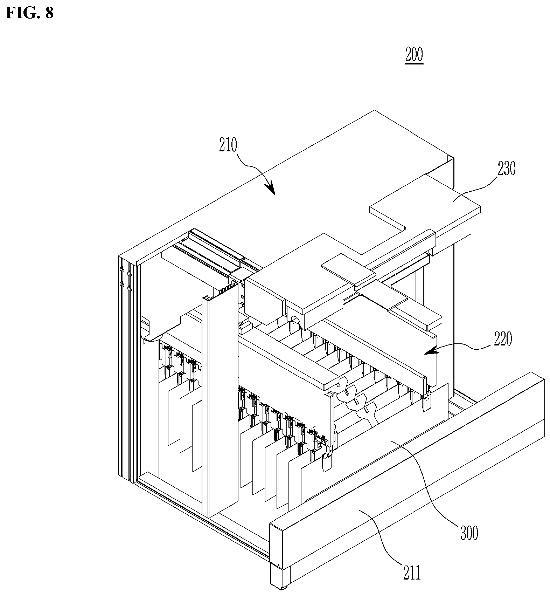

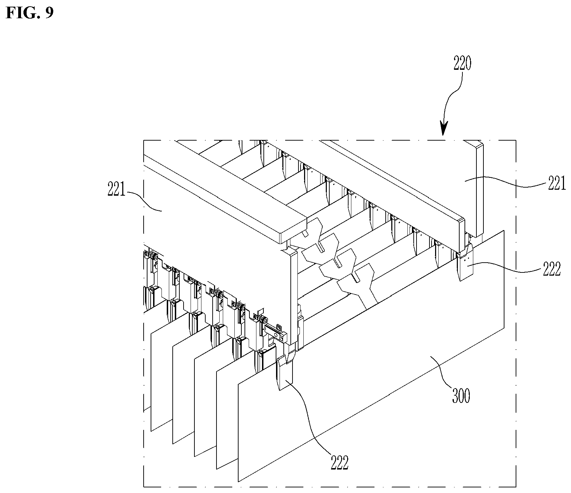

FIG. 8 is a perspective view of the pressure-sensitive member insertion unit of the pressure applying apparatus of FIG. 2. FIG. 9 illustrates a grip part, which is one component of the pressure-sensitive member insertion unit of FIG. 8.

The pressure-sensitive member insertion unit 200 of FIG. 8 includes a frame 210, a grip part 220, and a coupling part 230. The grip part 220 automatically grips and moves the pressure-sensitive member 300. It includes a grip part main body 221 and at least one gripper 222.

The grip part 220 may be provided as one unit. That is, the grip part main body 221 and the gripper 222 may each be provided as one unit to grip the central portion of the upper end of the pressure-sensitive member 300. Alternatively, the grip parts 220 may be provided in plural numbers. For example, as illustrated in FIG. 8, the grip part main body 221 and the gripper 222 may each be provided symmetrically in pairs to grip both sides of the pressure-sensitive member 300. Alternatively, for example, the grip part main body 221 and the gripper 222 may each be provided as three or four units, arranged at predetermined intervals along the width direction of the pressure-sensitive member 300 to grip the pressure-sensitive member 300. Thereby, various modifications and changes can be made to the embodiments.

Additionally, the gripper 222 per grip part main body 221 may be provided corresponding to the number of pressure-sensitive members 300 intended to be gripped at once.

The gripper 222 is coupled to the grip part main body 221. The gripper 222 may be provided, for example, at the lower end of the grip part main body 221, but the present disclosure is not necessarily limited thereto. It is sufficient for the gripper 222 to grip the pressure-sensitive member 300 and insert the pressure-sensitive member 300 into the mounting unit 130 of the jig unit 100, as described below.

The number, shape, etc. of the gripper 222 are not necessarily limited in the present disclosure, and various changes and modifications may be made in accordance with the environment in which the present disclosure is embodied.

The embodiment of FIGS. 8 and 9 illustrate a case in which a plurality of pressure-sensitive members 300 may be gripped at once, and one pair of grippers 222 per pressure-sensitive member 300 are provided. For example, the number of the pressure-sensitive members 300 may be the same as the number of the mounting units 130 of FIG. 3, but the present disclosure is not necessarily limited thereto, and various modifications may be made in accordance with the environment in which the present disclosure is embodied.

The grip part main body 221 is movable in the height direction, longitudinal direction, and width direction of the frame 210 of the pressure-sensitive member insertion unit 200. For reference, the height direction, longitudinal direction, and width direction of the frame 210 of the pressure-sensitive member insertion unit 200 coincide with the height direction, longitudinal direction, and width direction of the frame 110 of the jig unit 100, respectively.

The movement of the grip part main body 221 is exemplarily described as follows. For example, if the pressure-sensitive member 300 is stored and on standby in the lower part of the frame 210, the grip part main body 221 may move downward in the height direction of the frame 210 to grip the pressure-sensitive member 300. Alternatively, after gripping the pressure-sensitive member 300 with the gripper 222, the grip part main body 221 can move upward in the height direction of the frame 210. In some cases, the grip part main body 221 may already be gripping the pressure-sensitive member 300 while initially moving upward in the height direction.

In a state where the pressure-sensitive member 300 is gripped by the gripper 222, the grip part main body 221 moves forward toward the jig unit 100 (e.g., the grip part main body 221 moves forward in the longitudinal direction of the frame 210). The grip part main body 221 deviates from the frame 210 of the pressure-sensitive member insertion unit 200 and moves over the mounting unit 130 of the jig unit 100 of FIG. 3. Thereby, the pressure-sensitive member 300 gripped by the grip part main body 220 is located on the mounting unit 130 of the jig unit 100. At this time, if the alignment between the mounting unit 130 of the jig unit 100 and the pressure-sensitive member 300 does not match, the grip part main body 221 may be finely moved along the longitudinal direction of the frame 210 as necessary to achieve proper alignment. Alternatively, the grip part main body 221 may be slightly moved in the width direction of the frame 210 to achieve proper alignment.

When alignment between the mounting unit 130 of the jig unit 100 and the pressure-sensitive member 300 are achieved, in an embodiment, the grip part main body 221 moves toward the mounting unit 130 (e.g., the grip part main body 221 moves downward in the height direction of the frame 210), thereby inserting the pressure-sensitive member 300 into the mounting unit 130 of the jig unit 100. Next, the gripper 222 releases the grip of the pressure-sensitive member 300, so that the pressure-sensitive member 300 is mounted to the mounting unit 130. The grip part main body 221 again moves upward in the height direction of the frame 210. Next, as described above in FIG. 3, the pressurizing jig 120 applies pressure to the mounting unit 130 and the pressure-sensitive member 300 mounted on the mounting unit 130, and the pressurization force and flatness of the pressurizing jig 120 are measured by the pressure-sensitive member 300. Next, the pressure applied by the pressurizing jig 120 is released. The grip part main body 221 moves downward in the height direction of the frame 210 and grips the pressure-sensitive member 300 with the gripper 222. The grip part main body 221 moves again from the mounting unit 130 in the opposite direction of the mounting unit 130 (e.g., upward in the height direction of the frame 210). Next, the grip part main body 221 moves backward from the jig unit 100 toward the pressure-sensitive member insertion unit 200 (e.g., backward in the longitudinal direction of the frame 210). Thereby, it returns to the inside of the frame 210 of the pressure-sensitive member insertion unit 200.

Alternatively, in another embodiment, the grip part main body 221 moves toward the mounting unit 130 (e.g., the grip part main body 221 moves downward in the height direction of the frame 210) and the pressure-sensitive member 300 is inserted into the mounting unit 130 of the jig unit 100. Next, in a state where the gripper 222 grips the pressure-sensitive member 300, the pressurizing jig 120 applies pressure to the mounting unit 130 and the pressure-sensitive member 300 mounted on the mounting unit 130, as described above in FIG. 3. At this time, since the gap between the plurality of pressure-sensitive members 300 is narrowed by the pressurizing jig 120, the gap between the plurality of grippers 222 coupled to the grip part main body 221 also needs to be adjusted in a similar manner. Next, the pressurization force and flatness of the pressurizing jig 120 are measured using the pressure-sensitive member 300.

Next, pressure applied by the pressurizing jig 120 is released. In a state where the pressure-sensitive member 300 is gripped by the gripper 222, the grip part main body 221 moves from the mounting unit 130 in a direction opposite to the mounting unit 130 (e.g., upward in the height direction of the frame 210). Next, the grip part main body 221 moves backward from the jig unit 100 toward the pressure-sensitive member insertion unit 200 (e.g., backward in the longitudinal direction of the frame 210). Thereby, it returns to the inside of the frame 210 of the pressure-sensitive member insertion unit 200.

The grip part 220 may be connected to and driven by a grip part driving unit (not shown) that drives the grip part 220.

The coupling part 211 allows the pressure-sensitive member insertion unit 200 to be coupled and fixed to the jig unit 100. The coupling part 211 may be a part of the frame 210 of the pressure-sensitive member insertion unit 200, or may be provided separately. For example, the coupling part 211 may be coupled to the frame 110 of the jig unit 100. The method by which the coupling part 211 of the pressure-sensitive member insertion unit 200 is coupled to the frame 110 of the jig unit 100 is not limited, and it is sufficient if the method allows the pressure-sensitive member insertion unit 200 to be coupled to the jig unit 100. The method can be realized by adopting various coupling methods between two conventional components.

Based on the pressurization degree and/or flatness of the pressurizing jig 120 of the jig unit 100 measured by the pressure-sensitive member 300, and/or the pressurization force and/or flatness of the mounting unit 130, the pressurization force and/or flatness of the mounting unit 130 are corrected, and then the battery cell 20 is inserted into the mounting unit 130. For an explanation of when the battery cell 20 is inserted into the mounting unit 130, please refer to those described above in FIGS. 3 to 7.

The pressure-sensitive member 300 may be, for example, in the form of a plate, and may be a sensor that senses pressure in an electrical manner. The pressure-sensitive member 300 may be, for example, an electronic pressure-sensitive film. Alternatively, the pressure-sensitive member 300 may be, for example, a surface pressure sensor arranged on a plate. Any other sensor that senses pressure by an electrical method may be embodied as the pressure-sensitive member 300 of the present disclosure.

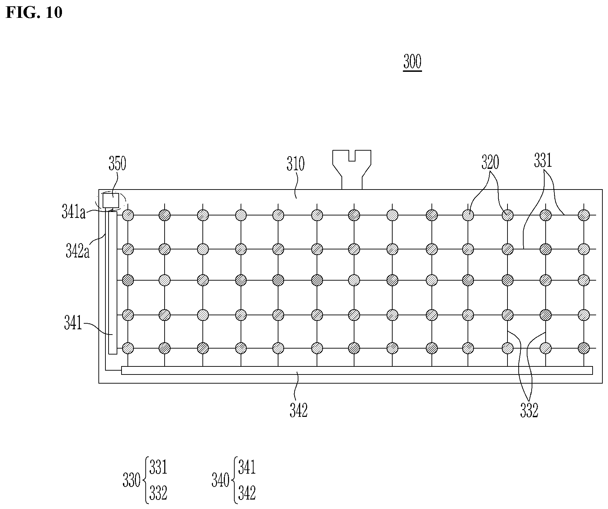

FIG. 10 illustrates an example of a pressure-sensitive member according to an embodiment of the present disclosure.

Referring to FIG. 10, the pressure-sensitive member 300 includes a main body 310 and a pressure sensor 320. In addition, the pressure-sensitive member 300 may further include a connection unit 330, a detection unit 340, and a transmission unit 350.

In a state where the pressure-sensitive member 300 is mounted on the mounting unit 130 of the jig unit 100, pressure is applied using the pressurizing jig 120, and at this time, the pressure sensor 320 senses the pressure value applied to the pressure-sensitive member 300.

The pressure sensors 320 are arranged in at least one row and at least one column over a large area of the main body 310 of the pressure-sensitive member 300. That is, the pressure sensor 320 may be provided as one unit, but a plurality of pressure sensors 320 may be arranged in multiple rows and/or multiple columns. As exemplarily illustrated in FIG. 10, the pressure sensors 320 may be arranged in multiple rows and/or multiple columns. Needless to say, in some cases, the pressure sensors 320 may be arranged in one row and multiple columns, or may be arranged in multiple rows and one column.

Each of the plurality of pressure sensors 320 may sense the pressure applied to each sub-region (sub-coordinate) of the pressure-sensitive member 300. For example, each of the plurality of pressure sensors 320 may be arranged at predetermined intervals in each row and/or each column.

The pressure sensor 320 is connected to a connection unit 330. The connection unit 330 transmits pressure data sensed by the pressure sensor 320 to the transmission unit 350 and may be, for example, a conductor transmitting an electrical signal. The connection unit 330 may be, for example, a conductive wire plated on the engraved surface of the main body 310, or a separate conductive wire added to the engraved surface of the main body 310. Alternatively, in some cases, the connection unit may be a conductive wire plated without engraving on the surface of the main body 310, or a separate conductive wire may be added. The pressure data may be, for example, a pressure value sensed by the pressure sensor 320.

The connection unit 330 includes a first connection unit 331 arranged in the row direction of the pressure-sensitive member 300 and a second connection unit 332 arranged in the column direction of the pressure-sensitive member 300. The first connection unit 331 and the second connection unit 332 may be provided as one unit, or may be provided as a plurality of units.

The case where a plurality of first connection units 331 are provided will be explained in further detail as follows. As illustrated in FIG. 10, the pressure sensors 320 may be arranged in multiple rows, with one first connection unit 331 arranged in each row, allowing a plurality of pressure sensors 320 arranged in each row to be electrically connected at once. Alternatively, although not illustrated in FIG. 10, one first connection unit 331 may be electrically connected to one or more pressure sensors 320, with the plurality of first connection units 331 being provided in each row.

Similarly, the case where a plurality of second connection units 332 are provided is as follows. As illustrated in FIG. 10, the pressure sensors 320 may be arranged in multiple columns, with one second connection unit 332 is arranged in each column, allowing the plurality of pressure sensors 320 arranged in each column to be electrically connected at once. Alternatively, although not illustrated in FIG. 10, one second connection unit 332 may be electrically connected to one or more pressure sensors 320, with the plurality of second connection units 332 arranged in each column.

The detection unit 340 includes a first detection unit 341 arranged in the column direction of the pressure-sensitive member 300, and a second detection unit 342 arranged in the row direction of the pressure-sensitive member 300.

The first detection unit 341 is provided between the first connection unit 331 arranged in the row direction of the pressure-sensitive member 300 and the transmission unit 350. That is, the first connection unit 331, which electrically connects the plurality of pressure sensors 320 arranged in rows, is electrically connected to the first detection unit 341. Pressure data from the plurality of pressure sensors 320 arranged in rows is received by the first connection unit 331, and the first detection unit 341 determines whether the pressure data falls within a predetermined range.

For example, in the embodiment of FIG. 10, multiple rows of first connection units 331 are electrically connected to the first detection unit 341. The first detection unit 341 receives pressure data from each of the multiple rows of first connection units 331 and determines whether the pressure data falls within a predetermined range.

The pressure data transmitted by the first connection unit 331 may, for example, be individual pressure values sensed by each pressure sensor 320 connected to the first connection unit 331, and in some cases, it may be the sum or average value of the pressure values, or the maximum or minimum pressure values sensed by each pressure sensor 320. This may be modified or changed in various ways in accordance with the environment in which the present disclosure embodied.

Among the pressure data received from the first connection units 331 of multiple rows, if the pressure data received from the first connection unit 331 of a specific row falls outside a predetermined range, the position (or order, coordinates) of the corresponding row and the pressure data received from the first connection unit 331 of that row are transmitted to the transmission unit 350. A connection unit 341a may be electrically connected between the first detection unit 341 and the transmission unit 350.

The pressure data transmitted to the transmission unit 350 may be, for example, pressure data received from the first connection unit 331 of the row (e.g., a pressure value sensed by the pressure sensor 320 of the row) or an alarm indicating that the pressure data falls outside a predetermined range. This can be modified and changed in various ways in accordance with the environment in which the present disclosure is embodied.

For example, when the first connection unit 331 of the multiple rows illustrated in the embodiment of FIG. 10 is viewed sequentially from bottom to top, if the pressure data received from the first connection unit 331 of the first to third rows falls within a predetermined range, but the pressure data received from the first connection units 331 of the fourth and fifth rows do not fall within the predetermined range, the fourth row and the pressure data received from the first connection units 331 of the fourth row, and the fifth row and the pressure data received from the first connection units 331 of the fifth row, can be transmitted to the transmission unit 350.

Similarly, the second detection unit 342 is provided between the transmission unit 350 and the second connection units 332 arranged in the column direction of the pressure-sensitive member 300. That is, the second connection unit 332, which electrically connects the plurality of pressure sensors 320 arranged in columns, is electrically connected to the second detection unit 342. Pressure data from the plurality of pressure sensors 320 arranged in columns is received by the second connection unit 332, and the second detection unit 342 determines whether the pressure data falls within a predetermined range.

For example, in the embodiment of FIG. 10, multiple columns of second connection units 332 are electrically connected to the second detection unit 342. The second detection unit 342 receives pressure data from each of the plurality of second connection units 332 in the multiple columns and determines whether the pressure data falls within a predetermined range.

The pressure data transmitted by the second connection unit 332 may, for example, be the individual pressure values sensed by each pressure sensor 320 connected by the second connection unit 332, or in some cases the sum or average value of the pressure values, or the maximum value or minimum value of the individual pressure values sensed by each pressure sensor 320. This can be modified and changed in various ways in accordance with the environment in which the present disclosure is embodied.

Among the pressure data received from of multiple columns of the second connection units 332, if the pressure data received from a specific column of the second connection unit 332 falls outside a predetermined range, the second detection unit 342 transmits the position (or order, coordinates) of the corresponding column and the pressure data received from the second connection unit 332 of that column to the transmission unit 350. A connection unit 342a may be electrically connected between the second detection unit 342 and the transmission unit 350.

The pressure data transmitted to the transmission unit 350 may be, for example, pressure data received from the second connection unit 332 of the corresponding column (e.g., pressure value sensed by the pressure sensor 320 of the corresponding column), or it may be an alarm indicating that the pressure is outside a predetermined range. This may be modified and changed in various ways in accordance with the environment in which the present disclosure is embodied.

For example, when the multiple columns second connection units 332 illustrated in the embodiment of FIG. 10 are viewed sequentially from left to right, if the pressure data received by the first to third columns of second connection units 332 does not fall within a predetermined range, the first to third columns and the pressure data received by the first to third columns of second connection units 332 can be transmitted to the transmission unit 350.

Meanwhile, the first detection unit 341 may be provided, for example, in the vicinity of either of the both side ends of the pressure-sensitive member 300. The second detection unit 342 may be provided, for example, in the vicinity of either of the upper end and lower end of the pressure-sensitive member 300. As illustrated in FIG. 10, when the second detection unit 342 is provided in the vicinity of the lower end of the pressure-sensitive member 300, unwanted damage to the detection unit 340 caused by the grip part 220 of the pressure-sensitive member insertion unit 200 when gripping the pressure-sensitive member 300 may be prevented. However, the present disclosure is not limited to those described above, and various modifications and variations may be made, for example, even if the second detection unit 342 is provided in the vicinity of the upper end of the pressure-sensitive member 300, the second detection unit 342 is provided at an engraving portion or a piercing portion of the main body 210 of the pressure-sensitive member 300, and is embodied by coating the surface of the detection unit 340 so as to protect it from the grip of the grip part 340, or the second detection unit 342 may be disposed so as to avoid the area where the 340 grips the pressure-sensitive member 300.

The transmission unit 350 collects pressure data received from the detection unit 340 and transmits it to the control unit, which will be described later.

For example, in the example described above with reference to the embodiment of FIG. 10, the transmission unit 350 receives pressure data received by the first detection unit 341 from the first connection unit 331 of the fourth and fifth rows, and the fourth and fifth rows, respectively, and receives pressure data received by the second detection unit 342 from the second connection unit 332 of the first to third columns and the first to third columns, respectively. This means that the pressure value sensed by the pressure sensor 320 at the intersection of the first through third columns and the fourth and fifth rows is likely outside the specified range.

The transmission unit 350 can transmit the pressure data transmitted from the first detection unit 341 and the second detection unit 342 as it is, or can convert and transmit the pressure data transmitted from the first detection unit 341 and the second detection unit 342.

In the former case, for example, the pressure data transmitted from the transmission unit 350 to the control unit (not shown) may be pressure data received from the first connection unit 331 of the fourth and fifth rows and the fourth and fifth rows, respectively, from the first detection unit 341, and pressure data received from the second connection unit 332 of the first to third columns and the first to third columns, respectively, from the second detection unit 342.

In the latter case, for example, the pressure data transmitted from the transmission unit 350 to the control unit (not shown) may be data converted into (X, Y) coordinate information for the fourth and fifth rows and the first to third columns, and an alarm indicating that pressure and/or flatness adjustment is required for an area corresponding to the corresponding coordinates of the mounting unit 130 of the jig unit 100. That is, the (X, Y) coordinate information may, for example, convert columns into X coordinates and rows into Y coordinates.

Regardless of whether the former case or the latter case, the pressure data transmitted from the transmission unit 350 to the control unit (not shown) may include the identification number (serial number) of the pressure-sensitive member 300, detection date and time, and other inspection-related data.

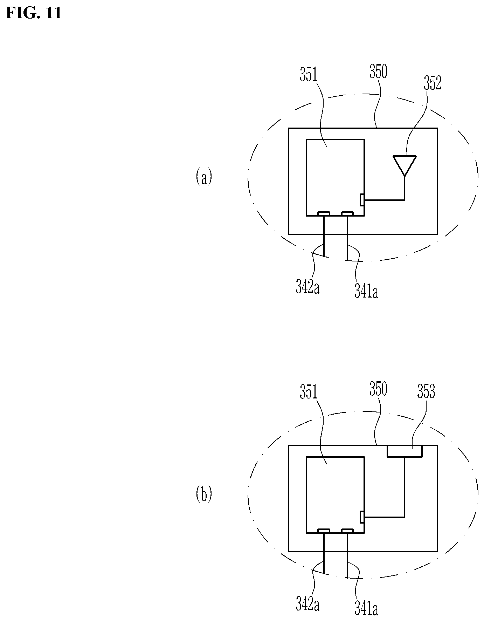

FIG. 11 is a reference diagram, schematically illustrating an embodiment of the transmission unit of the pressure-sensitive member of FIG. 10.

FIGH. 11(a) schematically illustrates the transmission unit 350 when communicating via wireless communication. In this case, the transmission unit 350 includes a processing unit 351 and a wireless communication antenna 352. FIG. 11(b) schematically illustrates the transmission unit 350 when communicating via wired communication. In this case, the transmission unit 350 includes a processing unit 351 and a wired communication terminal 353. A more detailed description of the processing unit 351, the antenna for wireless communication 352, and the terminal for wired communication 353 may be understood with reference to the components of a typical transmission unit.

The transmission unit 350 can communicate, for example, via a known wired or wireless communication interface that supports short-range or long-range communication. As an example, the communication interface may be a CAN communication interface, a daisy-chain interface, an Ethernet communication interface, a short-range wireless communication interface such as Wi-Fi, Bluetooth, or Zigbee. The present disclosure is not limited to those described above, and communication may be achieved via a known wired or wireless communication interface in accordance with the environment in which the present disclosure is embodied.

The pressure applying apparatus of FIG. 2 further comprises a control unit (not shown). The control unit may be integrated into the jig unit 100, or may be remotely connected from the outside via a wired or wireless communication interface. The control unit includes a processor capable of processing data and a transmission unit capable of transmitting and receiving data.

The control unit receives pressure data transmitted from the transmission unit 350 of the pressure-sensitive member 300, compares it with preset values, and if the value falls outside the error range, transmits a control command to the jig unit 100 to adjust (control) the pressurization degree and/or flatness of the pressurizing jig 120 and/or the pressurization force and/or flatness of the mounting unit 130.

As described above, the pressure data received from the transmission unit 350 of the pressure-sensitive member 300 may include information about the row and/or column of the sensed area or (X, Y) coordinate information for pressure data outside the specified range. It may also include pressure data (pressure values) for the region. Based on this, the control unit may calculate the degree of adjustment for the pressurization degree and/or flatness of the pressurizing jig 120, or may calculate the degree of correction for the pressurization degree of each of the cell pressurizing units 140(140a, 140b) provided on both sides of each mounting unit 130. Based on the data calculated by the control unit, the pressurization force and/or flatness of the pressurizing jig 120 and/or the pressurization degree and/or flatness of the mounting unit 130 may be automatically adjusted (controlled).

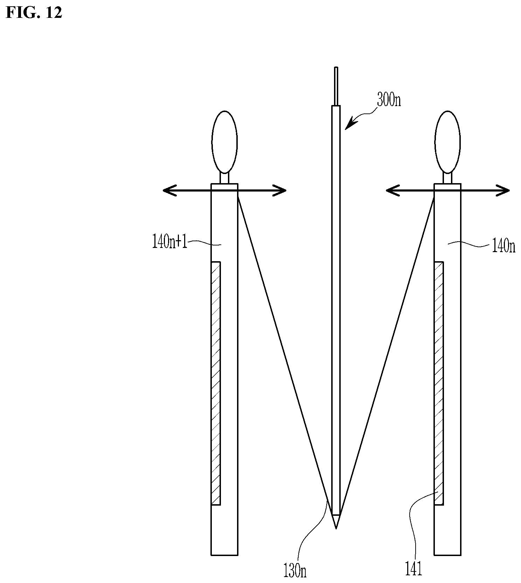

FIG. 12 is a reference diagram of FIG. 5 and illustrates an embodiment in which a plurality of mounting units are individually adjusted in the above-described embodiments.

In some cases, as illustrated in FIG. 12, if pressure data exceeding a predetermined range is detected only from the n-th pressure-sensitive member 300n mounted on the n-th mounting unit 130n among the plurality of mounting units 130 of the jig unit 100, the pressurization degree of the cell pressurizing members 140n, 140n+1 at the front and rear ends of the mounting unit 130n may be adjusted. At this time, the cell pressurizing members 140a (see FIG. 7) and the cell pressurizing members 140b (see FIG. 7) may be adjusted differently based on information about the row and/or column of the area where the pressure data exceeding the predetermined range of the pressure-sensitive member 300 was detected, or based on (X, Y) coordinate information.

Meanwhile, the pressure applying apparatus of FIG. 2 may further include a storage unit (not shown) corresponding to a database. The storage unit may be integrated into the control unit or remotely connected from outside. The storage unit can store various data, such as data regarding the pressure value measured by the pressure-sensitive member 300, data regarding the flatness correction of the pressurizing jig 120, and data regarding the progress of processes such as charging and discharging of the battery cell 20.

In the specification of the present disclosure, the battery cell 20 is illustrated as a pouch-type battery cell by way of example, the present disclosure is not limited thereto. It can also be applied to cases where the pressure-sensitive member 300 is first inserted before applying pressure to a cylindrical or prismatic battery cell with a jig.

The pressure applying apparatus of FIG. 2 can be applied, for example, to the formation process in the secondary battery manufacturing process, but the present disclosure is not limited thereto, and can be applied in various ways in cases where it is necessary to adjust the pressurizing jig in order to apply pressure to the secondary battery.

Although preferred embodiments of the present disclosure have been shown and described above, the scope of the present disclosure is not limited thereto, and numerous other variations and modifications can be made to the embodiments by those skilled in the art using the basic principles of the invention defined in the appended claims, which also falls within the spirit and scope of the invention.

### [Description of Reference Numerals]

10: battery cell pressure applying apparatus
20: battery cell
100: jig unit
110: frame
120: pressurizing jig
130: mounting unit
140: cell pressurizing unit
150: jig guide shaft
160: mounting unit
170: jig driving unit
200: pressure-sensitive member insertion unit
210: frame
220: grip part
221: grip part main body
222: gripper
230: coupling part
300: pressure-sensitive member
310: main body
320: pressure sensor
330: connection unit
340: detection unit
350: transmission unit

## Claims

1. An apparatus for applying pressure to a battery cell, the apparatus comprising:
a pressurizing unit that applies pressure to the battery cell, and a pressure-sensitive member insertion unit that supplies a pressure-sensitive member to the pressurizing unit,
wherein the pressurizing unit comprises a mounting unit that mounts the battery cell or the pressure-sensitive member, and a pressurizing jig that moves toward the mounting unit to apply pressure to the battery cell or the pressure-sensitive member, and
wherein the pressure-sensitive member insertion unit comprises at least one grip part that automatically grips and moves the pressure-sensitive member.

2. The apparatus for applying pressure to a battery cell according to claim 1,
wherein the grip part comprises a grip part main body and at least one gripper coupled to the grip part main body, and
the gripper can grip the pressure-sensitive member.

3. The apparatus for applying pressure to a battery cell according to claim 2,
wherein the grip part is provided in plural numbers, and is provided symmetrically along the width direction of the pressure-sensitive member or arranged at predetermined intervals.

4. The apparatus for applying pressure to a battery cell according to claim 2,
wherein the mounting unit of the pressurizing unit is provided in plural numbers,
the pressure-sensitive member is provided in plural numbers, and
a plurality of the grippers are provided per grip part, thereby allowing the plurality of pressure-sensitive members to be gripped at once by the plurality of grippers.

5. The apparatus for applying pressure to a battery cell according to claim 2,
wherein in a state where the gripper grips the pressure-sensitive member, the grip part main body is movable from the pressure-sensitive member insertion unit to the jig unit, or in the reverse direction thereof.

6. The apparatus for applying pressure to a battery cell according to claim 2,
wherein in a state where the gripper grips the pressure-sensitive member, the grip part main body is movable into the mounting unit of the jig unit, or in the reverse direction thereof.

7. The apparatus for applying pressure to a battery cell according to claim 1,
wherein the grip part main body is movable in the height direction, longitudinal direction, and width direction of the pressure-sensitive member insertion unit, respectively, thereby enabling alignment between the pressure-sensitive member and the mounting unit after the pressure-sensitive member is located on the mounting unit of the jig unit.

8. The apparatus for applying pressure to a battery cell according to claim 1,
wherein the pressure-sensitive member is a sensor that senses pressure in an electrical manner.

9. The apparatus for applying pressure to a battery cell according to claim 8,
wherein the pressure-sensitive member is a surface pressure sensor or an electronic pressure-sensitive film.

10. The apparatus for applying pressure to a battery cell according to claim 1,
wherein the pressure-sensitive member comprises at least one pressure sensor arranged over a large area of the main body of the pressure-sensitive member, and senses a pressure value applied to the pressure-sensitive member mounted on the mounting unit.

11. The apparatus for applying pressure to a battery cell according to claim 1,
wherein the pressure-sensitive member comprises a plurality of pressure sensors arranged over a large area of the main body of the pressure-sensitive member,
wherein the plurality of pressure sensors are arranged in at least one row and at least one column, and each of the plurality of pressure sensors senses the pressure applied to each sub-region of the pressure-sensitive member.

12. The apparatus for applying pressure to a battery cell according to claim 11,
wherein the pressure-sensitive member further comprises:
a detection unit that receives pressure data transmitted from the plurality of pressure sensors and determines whether the pressure data falls within a predetermined range; and
a connection unit that electrically connects the detection unit and the plurality of pressure sensors.

13. The apparatus for applying pressure to a battery cell according to claim 12,
wherein the pressure-sensitive member further comprises a transmission unit that transmits pressure data from the detection unit.

14. The apparatus for applying pressure to a battery cell according to claim 11,
wherein the pressure-sensitive member further comprises a first connection unit arranged in the row direction of the pressure-sensitive member, and a second connection unit arranged in the column direction,
wherein the first connection unit electrically connects at least one pressure sensor arranged in each row, and the second connection unit electrically connects at least one pressure sensor arranged in each column.

15. The apparatus for applying pressure to a battery cell according to claim 14,
wherein the pressure-sensitive member comprises a first detection unit electrically connected to the first connection unit, and a second detection unit electrically connected to the second connection unit,
wherein the first detection unit determines whether the pressure data transmitted by the first connection unit falls within a predetermined range, and the second detection unit determines whether the pressure data transmitted by the second connection unit falls within the predetermined range.

16. The apparatus for applying pressure to a battery cell according to claim 15,
wherein the first detection unit transmits the row of the first connection unit that has transmitted pressure data that does not fall within the predetermined range, among the plurality of rows of the first connection units, and the pressure data of the corresponding row, and
the second detection unit transmits the column of the second connection unit that has transmitted pressure data that does not fall within the predetermined range, among the plurality of columns of the second connection units, and the pressure data of the corresponding column.

17. The apparatus for applying pressure to a battery cell according to claim 15,
wherein the pressure data is at least one of: each pressure value sensed from each of the plurality of pressure sensors, the sum or average value of the pressure values of the plurality of pressure sensors, and the maximum or minimum value among the pressure values sensed from the plurality of pressure sensors.

18. The apparatus for applying pressure to a battery cell according to claim 1,
wherein the pressurization force or flatness of the pressurizing jig of the jig unit or the pressurization force or flatness of the mounting unit is calculated in accordance with the pressure data sensed by the pressure-sensitive member.

19. The apparatus for applying pressure to a battery cell according to claim 1,
wherein the apparatus for applying pressure to a battery cell further comprises a control unit integrated into or remotely connected to the jig unit,
wherein the control unit controls the pressurization force or flatness of the pressurizing jig of the jig unit or the pressurization force or flatness of the mounting unit in accordance with the pressure sensed by the pressure-sensitive member.

20. The apparatus for applying pressure to a battery cell according to claim 1,
wherein the apparatus for applying pressure to a battery cell can perform charging and discharging in a state of applying pressure to the battery cell,
the pressurizing unit further comprises at least two cell pressurizing units per mounting unit, and
the cell pressurizing unit comprises a charge/discharge terminal, wherein the charge/discharge terminal comes into contact with the electrode lead of the battery cell when applying pressure to the battery cell by the pressurizing jig.
